# EUROPÄISCHE PATENTSCHRIFT

(11) **EP 0 869 353 B1**
(45) Veröffentlichungstag und Bekanntmachung des Hinweises auf die Patenterteilung: **26.05.2004**
(21) Anmeldenummer: 98105380.4
(22) Anmeldetag: 25.03.1998
(51) Int. Cl.: G01N 27/00

(54) **Verfahren zur Herstellung eines Sensors**
Method for manufacturing a sensor
Procédé de fabrication d'un capteur

(30) Priorität: 03.04.1997 DE 19713719
(43) Veröffentlichungstag der Anmeldung: 07.10.1998
(73) Patentinhaber: Kühn, Hans-R., Dipl.-Ing., 38678 Clausthal-Zellerfeld (DE)
(72) Erfinder:
(74) Vertreter: Schneider, Peter Christian, Dr.

(56) Entgegenhaltungen:
- EP-A- 0 576 263
- EP-A- 0 706 052
- US-A- 4 674 320
- US-A- 5 387 462
- PATENT ABSTRACTS OF JAPAN vol. 017, no. 625 (E-1461), 18. November 1993 & JP 05 198404 A (TDK CORP), 6. August 1993
- PATENT ABSTRACTS OF JAPAN vol. 014, no. 131 (C-0700), 13. März 1990 & JP 02 004959 A (AGENCY OF IND SCIENCE & TECHNOL;OTHERS: 01), 9. Januar 1990

## Beschreibung

Die Erfindung betrifft ein Verfahren zur Herstellung eines Sensors zur Messung physikalischer und / oder chemischer Größen mit Hilfe eines Tunnelstromeffekts mit folgenden Schritten:
1. An Kontakte einer Grundschicht wird eine Spannung angelegt,
2. eine aus Partikeln bestehendes Substanz wird derart in und / oder abdeckungsfrei auf der Grundschicht angeordnet, dass zwischen den Kontakten ein Tunnelstrom durch die Grundschicht fließt.

Die Erfindung betrifft weiterhin ein Verfahren zur Herstellung eines Sensors zur Messung physikalischer und / oder chemischer Größen mit Hilfe eines Tunnelstromeffekts mit folgenden Schritten:
1. an Kontakte einer Grundschicht wird eine Spannung angelegt,
2. auf einer Grundschicht wird ein Belag aufgebracht,
3. die Grundschicht mit dem Belag wird einer thermischen Behandlung unterworfen,
4. die thermische Behandlung wird derart gesteuert, dass
   4.1. Atome aus dem Belag in die Grundschicht diffundieren und
   4.2. dort Partikel bilden, die so verteilt sind,
   4.3. dass zwischen den Kontakten ein Tunnelstrom durch die Grundschicht fließt.

Aus der EP 0706 052 A2 ist ein Sensor zur Messung physikalischer und / oder chemischer Größen mit Hilfe eines Tunnelstromeffektes und ein Verfahren zu seiner Herstellung bekannt. Bei dem bekannten Sensor ist eine Grundschicht vorgesehen, in der feinverteilte Partikel angeordnet sind. Die Verteilung der Partikel wird dabei so gewählt, dass zwischen den Partikeln nach Anlegen einer Spannung ein Tunnelstrom fließt bzw. messbar ist.

Weiterhin ist aus der US-A-5 387 462 ein Verfahren zur Herstellung eines Sensors bekannt, bei dem physikalische und / oder chemische Größen mit Hilfe von unabhängigen Widerstandsund Kapazitätsimpetanzeigenschaften gemessen werden. Der als Verbundartikel mit einer elektrisch leitfähigen Fläche ausgebildete Sensor weist eine Einkapselungsschicht mit einer regelmäßigen oder unregelmäßigen Anordnung diskreter Mikrostrukturen auf. Jede Mikrostruktur weist eine "whiskerähnliche" Struktur und gegebenenfalls eine die whiskerähnliche Struktur umgebende konforme Beschichtung auf. Die Mikrostrukturen sind in der Einkapselungsschicht derart eingekapselt, dass ein Ende jeder Mikrostruktur in der Einkapselungsschicht eingebettet ist und das andere Ende jeder Mikrostruktur freiliegt und mit einer Oberfläche der Einkapselungsschicht übereinstimmt. Die Elektronenleitung kann dabei auch auf einen Tunneleffekt basieren.

Weiterhin ist aus der US-A 4 6/4 320 ein Verfahren zur Herstellung eines Gassensors bekannt, bei dem Gas mit Hilfe eines Tunnelstromeffektes gemessen wird. Dabei ist eine Grundschicht vorgesehen, in der fein verteilte Partikel bzw. Inseln angeordnet sind. Die Verteilung der Partikel ist dabei so gewählt, dass zwischen den Partikeln nach Anlegung einer Spannung ein Tunnelstrom messbar ist. Die Grundschicht ist auf einer Substratschicht angeordnet. Zur Herstellung wird auf der Substratschicht ein geschlossener Goldfilm aufgebracht. Mittels einer Wärmebehandlung bilden sich Inseln, wobei die mittlere Größe und Verteilung der Inseln durch die Dauer und Temperatur der Wärmebehandlung beeinflusst werden. Die Inseln liegen auf der Substratschicht auf. Anschließend wird ein halbleitendes Polymer, welches Gase absorbieren kann, im Vakuum auf die Substratoberfläche aufgedampft. Das Polymer umschließt die Inseln und bildet mit diesen die Grundschicht.

Nachteilig bei den bekannten Verfahren ist, dass die Charakteristik des Sensors von der Verteilung der Partikel/Inseln in der Grundschicht abhängt. Dadurch kann die Charakteristik und der entsprechende Tunnelstrom einzelner Sensoren unterschiedlich sein, so dass eine Eichung bzw. Kalibrierung jedes Sensors notwendig ist.

Eine gezielte Anordnung von Inseln auf der Grundschicht ist bei dem bekannten Verfahren durch die Thermik der Inselerzeugung aus einem geschlossenen Film nicht möglich. Eine stromgesteuerte Anordnung der Inseln ist aufgrund des mehrstufigen Aufbaues ebenfalls nicht möglich. Auch ist der bekannte Sensor nur als Gassensor ausgebildet und nicht zur Messung physikalischer und anderer Größen geeignet.

Die Druckschrift Feinwerktechnik und Messtechnik, 100, 12.1992, Seiten 571-573, beschreibt eine Differentialtunnelstrecke, mit der eine hochauflösende Messung einer Lageabweichung ermöglicht ist. Dabei ändern sich zwei Tunnelstrecken gegensinnig mit der Lageabweichung, so dass sich auch die Tunnelströme entsprechend gegensinnig ändern.

Beim Aufdampfen von dünnen Schichten auf ein Substrat kommt es zu folgenden Wachstumsmodi: werden Metalle auf ein Metallsubstrat aufgedampft, ergibt sich ein zweidimensionales Wachstum, bei Metallen auf ein Dielektrikum dagegen ein dreidimensionales Wachstum. Es kann zu einem inselartigen Wachstum des Aufdampfmaterials kommen. Dies bedeutet, dass an einigen Stellen auf dem Substrat bereits folgende Schichten wachsen, bevor die erste Schicht auf dem Substrat geschlossen ist. Dieses inselartige Wachstum tritt beispielsweise bei der Herstellung und beim Kontaktieren von Schwingquarzen auf, ist bekannt und unerwünscht.

Aufgabe der vorliegenden Erfindung ist es daher, ein einfaches kostengünstiges Verfahren zur Herstellung eines Sensors anzugeben, dass ohne aufwendige Kalibrierung der hergestellten einzelnen Sensoren auskommt. Die Sensoren sollen dabei für eine Vielzahl von Messproblemen einsetzbar sein.

Die Aufgabe wird erfindungsgemäß durch die Merkmale der Ansprüche 1 und 6 gelöst.

Dadurch, dass die Menge der anzuordnenden Substanz bzw. Partikel in Abhängigkeit einer zwischen den Kontakten gemessenen elektrischen Größe gesteuert wird, bis bei einer vorgegebenen Spannung ein vorgegebener Tunnelstrom fließt, wird vorteilhaft erreicht, dass alle Sensoren mit gleichem Material von Substanz und Grundschicht, die gleiche Charakteristik aufweisen. Dadurch brauchen die so hergestellten Sensoren nicht einzeln kalibriert werden. Auch kann ein aufwendiges Mischen des Materials der Grundschicht vermieden werden. Die Inseln bzw. Partikel können relativ einfach und zielgerichtet, durch den Tunnelstrom gesteuert, angeordnet werden. Das Herstellungsverfahren wird damit kostengünstiger.

Die Unteransprüche beschreiben zweckmäßige Ausgestaltungen.

Bei dem nach dem erfindungsgemäßen Verfahren hergestellten Sensor ist eine Grundschicht vorgesehen. Auf dieser Grundschicht sind Inseln angeordnet. Der mittlere Abstand, die mittlere Größe und die Materialeigenschaften der Inseln und der Grundschicht sind derart gewählt, daß zwischen den Inseln ein Tunnelstrom meßbar ist. Zur Messung des Tunnelstromes und zur Anlegung der erforderlichen Spannung sind auf der Grundschicht Kontakte angeordnet, an die entsprechende Meßgeräte bzw. eine Spannungsquelle anschließbar sind. Die Inseln liegen abdeckungsfrei auf der Grundschicht auf, werden also nicht von einer Schicht überdeckt.

Alternativ zu der Auflage der Inseln auf der Grundschicht können entsprechende Partikel in der Grundschicht selbst feinverteilt angeordnet sein. Dies ergibt dann eine dreidimensionale Verteilung der Partikel in der Grundschicht. Dadurch wird erreicht, daß eine, im Vergleich zur Anordnung der Inseln auf der Grundschicht, stabilere Struktur erzeugt wird.

Es ist auch möglich, daß sowohl Inseln als auch Partikel, die in der Grundschicht selber angeordnet sind, vorgesehen sind. Die Partikel sind in der Grundschicht dann feinverteilt, also dreidimensional angeordnet.

Die Grundschicht besteht aus einem nichtleitenden oder halbleitenden Material, die Partikel bzw. Inseln aus einem leitenden oder halbleitenden Material. Die Materialien werden entsprechend den jeweiligen Anforderungen ausgewählt.

Zur besseren Handhabbarkeit des Sensors kann diesem eine Trägerschicht zugeordnet sein.

Der Sensor ist vielfältig einsetzbar. Die Arbeitsweise beruht auf dem - bekannten - Tunneleffekt, über den die Inseln bzw. Partikel untereinander verbunden sind. Die Ermittlung der gesuchten physikalischen und / oder chemischen Größen mittels des Sensors erfolgt entsprechend einem der nachfolgend geschilderten Effekte:
1. Zwischen den Inseln bzw. den Partikeln bildet sich bei einer angelegten Spannung ein Tunnelstrom aus, dessen Größe von den auf den Sensor einwirkenden Bedingungen abhängig ist und detektiert wird. Da der Tunnelstrom exponentiell von der Entfernung der Inseln bzw. Partikel abhängt und weiterhin auch von dem Insel- bzw. Partikel- und Grundschichtmaterial beeinflußt wird, kann auf diesem Effekt der Sensor als hochempfindlicher Druck-, Temperatur-, Feuchte-, Gas- oder Deformationssensor benutzt werden. Beispielsweise können Gase durch Auflage eines molekularen Siebes direkt an den Inseln nachgewiesen werden.
2. Die mittlere Größe der Inseln bzw. Partikel wird derart eingestellt, daß die mittlere freie Weglänge der Elektronen größer ist als der Durchmesser der Inseln bzw. Partikel. Die Elektronen werden an den Insel- bzw. Partikelwänden elastisch reflektiert und verhalten sich wie ein freies Elektronengas. Sie können Energie aufnehmen, bis sie den Festkörper verlassen und detektiert werden können. Die Methode der Energiezufuhr ist dabei unerheblich. Es kann z. B. mittels Laser-, Infrarot-, Partikel-, HF - Strahlung oder durch Strom Energie zugeführt werden. Solch ein Sensor kann u. a. als Empfänger oder Detektor für elektromagnetische Strahlung, als Sensor für Abstandsmessungen, als hochauflösender Bildwandler oder als Kaltkathode benutzt werden.
3. Ebenso, wie Elektronenemission stattfindet, findet auch Lichtemmission statt, so daß Licht detektiert werden kann. Dieser Effekt kann beispielsweise zum Aufbau eines Lichtemitters benutzt werden.

Jede Änderung der Partikel und / oder Inseln, beispielsweise Längenänderungen, Quellungen, chemische oder elektrische Veränderungen, können registriert werden. Der Sensor ist daher vielfältig einsetzbar.

Zur Herstellung des Sensors wird an den Kontakten der Grundschicht eine Spannung angelegt. Auf- bzw. einzubringende Substanz, beispielsweise in Form von Teilchen, wird derart auf bzw. in der Grundschicht angeordnet, daß die Kontakte über einen Tunneleffekt miteinander verbunden sind. Die Menge der Substanz wird in Abhängigkeit einer zwischen den Kontakten gemessenen elektrischen Größe gesteuert.

Als elektrische Größe kann ein Tunnelstrom, ein Widerstand oder eine Spannung gemessen werden.

Dadurch wird sichergestellt, daß jeder der derart hergestellten Sensoren die gleiche Kennlinie aufweist, eine separate Kalibrierung jedes Sensors also nicht mehr erforderlich ist.

Zur Erreichung einer bestimmten Sensorcharakteristik kann der Wert der elektrischen Größe in Abhängigkeit des Substanzmaterials und des Materials der Grundschicht einmalig mittels einer Kalibrierung festgelegt werden. Die Kalibrierung kann beispielsweise durch elektronenmikroskopische Untersuchungen erfolgen. Diese Kalibrierungskurve dient dann für alle Sensoren mit gleichem Material der Substanz und der Grundschicht sowie gleicher elektrischer Größe.

Auch andere Verfahren zur Kalibrierung sind möglich und dem Fachmann bekannt. Es kommt lediglich darauf an, die mittlere Substanzgröße und den mittleren -abstand, zu messen.

Die Inseln bzw. Partikel werden auf der Grundschicht bzw. in der Grundschicht durch bekannte Techniken wie beispielsweise Aufdampftechnik, thermisches Eindiffundieren, Ionenimplantation auf- bzw. eingebracht.

Die aufzubringenden Substanz kann mittels eines Verdampfers bereitgestellt werden, wobei die Aufbringung dann in einem Vakuum erfolgt.

Die Inseln entstehen direkt beim beispielsweise Aufdampfen. Im Gegensatz dazu wird im Stand der Technik Gold aufgedampft, ohne daß es zu einer Inselbildung kommt. Diese wird anschließend durch eine Wärmebehandlung hervorgerufen.

Das Einbringen von Partikeln in die Grundschicht erfolgt durch Aufbringung und / oder Auflegung eines Belages wie beispielsweise eines Materialfilmes bzw. einer Materialfolie auf die Grundschicht. Die Grundschicht mit dem Belag wird nach dem Aufbringvorgang einer thermischen Behandlung unterworfen. Die thermische Behandlung wird derart gesteuert, daß Atome aus dem Belag in die Grundschicht eindiffundieren und dort feinverteilte Partikel bilden. Zwischen diesen Partikeln ist nach Anlegung einer Spannung ein Tunnelstrom meßbar.

Die mittlere Inselgröße und -verteilung für die gegebenen Materialien kann anhand des Tunnelstromes eingestellt werden, wenn zuvor eine Kalibrierung anhand von elektronenmikroskopischen Untersuchungen stattgefunden hat. Die mittlere Inselgröße kann bis ca. 100 Å betragen. Der mittlere Inselabstand kann zwischen 15 Å und 30 Å liegen.

Es versteht sich, daß, soweit vorliegend von Inseln oder von Partikeln die Rede ist, stets beides entsprechend anwendbar ist.

Die Erfindung wird anhand von Ausführungsbeispielen weiter erläutert.

Es zeigen jeweils in schematischer Darstellung
- Figur 1: eine Ausführungsvariante eines Sensors,
- Figur 2: eine erste Herstellungsvariante des Sensors,
- Figur 3: eine zweite Herstellungsvariante des Sensors und
- Figur 4: einen Drucksensor.

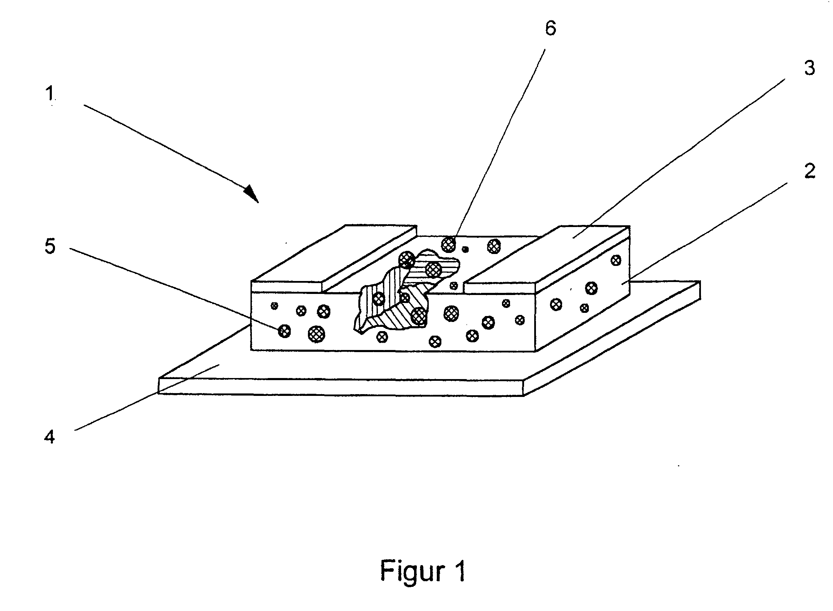

In der Figur 1 ist ein Sensor 1 dargestellt, der eine Grundschicht 2 aufweist. Auf der Grundschicht 2 sind Kontakte 3 vorgesehen. Der Sensor 1 ist auf einer Trägerschicht 4 aufgebracht.

In der Grundschicht 2 sind Partikel 5 und auf der Oberfläche der Grundschicht 2 Inseln 6 angeordnet. Es versteht sich, daß der Sensor 1 auch nur Partikel 5 oder nur Inseln 6 aufweisen kann. Der mittlere Abstand, die mittlere Größe und die Materialeigenschaften der Inseln 6 und Partikel 5 sind in Verbindung mit der Grundschicht 2 derart gewählt, daß zwischen den Kontakten 3 bei einer angelegten Spannung ein Tunnelstrom meßbar ist.

Die Grundschicht 2 besteht aus einem nicht- oder halbleitenden Material, die Inseln 6 und Partikel 5 aus leitendem oder halbleitendem.

Die Trägerschicht 4 ist an das jeweilige Meßproblem angepaßt. Für Druckmessungen kann eine elastische Membran vorgesehen sein. Für Temperaturmessungen besteht die Trägerschicht 4 aus Material mit geringem Ausdehnungskoeffizienten.

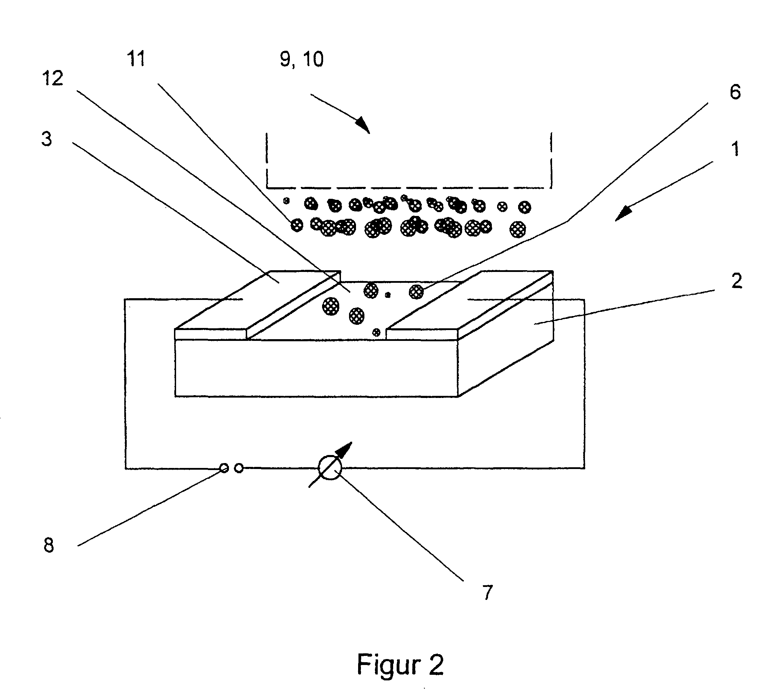

In der Figur 2 ist eine erste Herstellungsvariante eines Sensors 1 dargestellt. An den Kontakten 3 ist ein Meßgerät 7 und eine Spannungsquelle 8 angeschlossen. In einiger Entfernung von der Grundschicht 2 ist eine Quelle 9 angeordnet, beispielsweise ein Goldverdampfer 10, in dem Insel- bzw. Partikelmaterial verdampft wird und das dann inselförmig auf der Grundschicht 2 aufwächst.

Nach einem Einschalten der Inselquelle 9 lagert sich die Substanz 11 als Inseln 6 auf einer Oberfläche 12 des Sensors 1 ab. Ab einer bestimmten Menge an Inseln 9 beginnt - bei nichtleitendem Material der Grundschicht 2 - ein meßbarer Tunnelstrom zu fließen, der durch das Meßgerät 7 angezeigt wird. Besteht die Grundschicht 2 aus halbleitendem Material, ändert sich die Größe des Tunnelstromes aufgrund der Ablagerungen der Inseln 6 auf der Oberfläche 12 des Sensors 1. Der gemessenen Tunnelstrom ist charakteristisch für die mittlere Größe der Inseln 6 und deren mittleren Abstand bei einem gegebenen Material der Substanz 11 bzw. der Inseln 6 und der Grundschicht 2. Bei einer festen vorgegebenen Spannung, gleichem Material und einem bestimmten Strom ist auf dem Sensor 1 immer die gleiche mittlere Größe und Verteilung der Inseln 6 gegeben. Bei der Herstellung des Sensors 1 wird daher die Zugabe der Substanz 11 über den Tunnelstrom gesteuert; erreicht also der am Meßgerät 7 angezeigte Tunnelstrom einen vorgegebenen Wert, wird die Zugabe der Substanz 11 unterbrochen. Der derart hergestellte Sensor 1 besitzt dann die gleiche Eichkurve, wie andere entsprechend hergestellte Sensoren 1. Eine Kalibrierung jedes einzelnen Sensors 1 ist daher entbehrlich.

Die Charakteristik des Sensors 1 ist durch eine einmalige Kalibrierung zu ermitteln. Dies kann durch eine elektronenmikroskopische Untersuchung erfolgen. Die Kalibrierung hat Gültigkeit für jeweils gleiche Materialien der Substanz 11 und der Grundschicht 2 bei dem vorgegebenen Wert des Tunnelstromes bei gleicher Spannung.

Neben und / oder anstatt des Tunnelstromes können auch Spannungs- und / oder Widerstandsmessungen erfolgen und als charakteristische Größe des Sensors 1 herangezogen werden.

Die beschriebene Überwachung der Zugabe von Material 11 eignet sich sowohl für Inseln 6 als auch für Partikel 5.

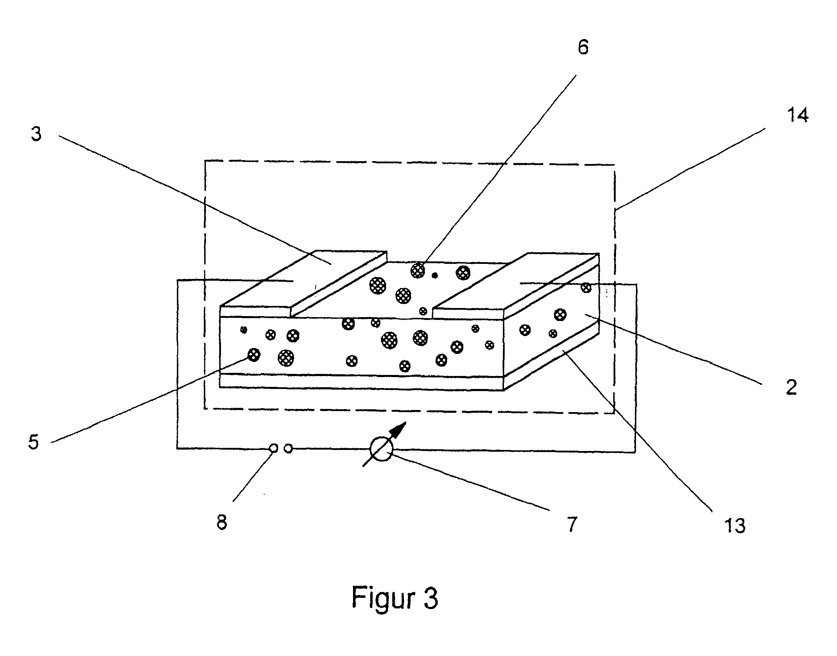

In der Figur 3 ist eine zweite Herstellungsalternative für einen Sensor 1 dargestellt. Auf der Grundschicht 2 ist ein Belag 13 in Form eines Materialfilms aus leitendem oder halbleitendem Material durch bekannte Techniken wie Aufdampfen oder Auflegen einer dünnen Folie aufgebracht. Mittels einer thermischen Behandlung in einem Ofen 14, durch Infrarotstrahlung oder andere Verfahren diffundieren Atome aus dem Belag 13 in die Grundschicht 2 und bilden dort feinverteilte Partikel 5. Die Kontrolle der mittleren Partikelgröße erfolgt wie oben beschrieben.

Wie hier dargestellt, kann der Sensor 1 sowohl Inseln 6 als auch Partikel 5 aufweisen.

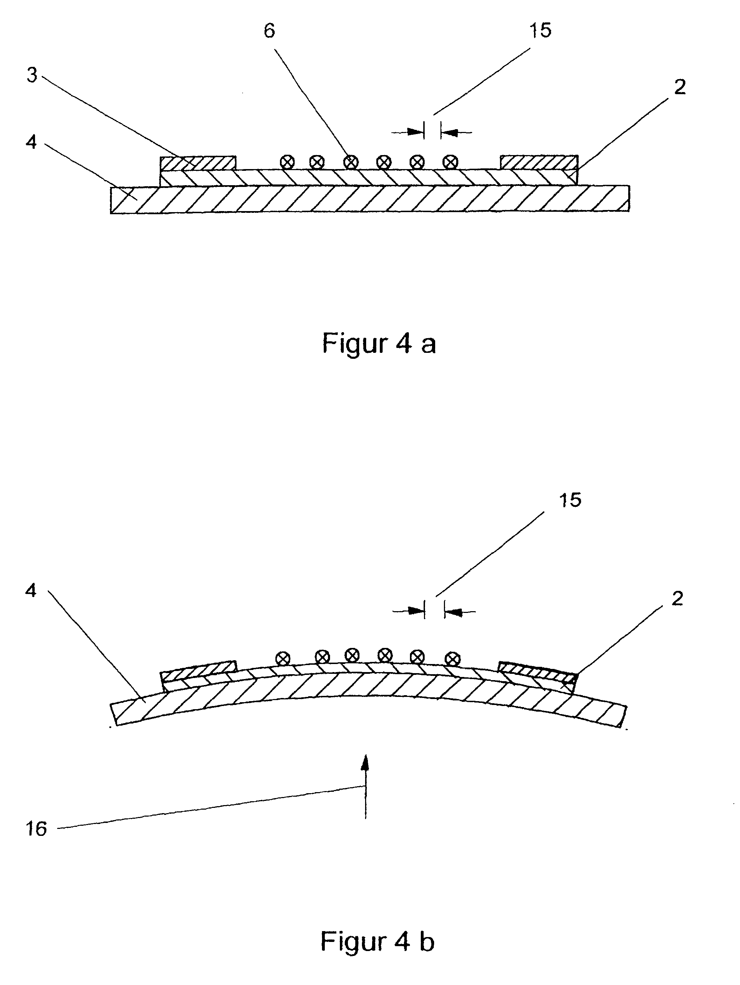

In der Figur 4 ist ein Sensor 1 als Drucksensor ausgebildet. Die Figur 4 a zeigt den Sensor 1 in unbelastetem Zustand. Die Inseln 6 weisen einen mittleren Abstand 15 auf. Wird der Sensor 1 gemäß einem Pfeil 16 mit einer Kraft beaufschlagt (s. Figur 4 b), erfolgt eine Durchbiegung und eine Änderung des mittleren Abstandes 15 zwischen den Inseln 6. Diese Änderung des mittleren Abstandes 15 bewirkt eine exponentielle Änderung des Tunnelstromes. Über die mittels der Kalibrierung erhaltenen Eichkurve ist die Kraft bzw. der Druck aus dem Tunnelstrom ablesbar. Durch die exponentielle Änderung ist die Genauigkeit und Empfindlichkeit hoch.

Die Trägerschicht 4 besteht aus einer Edelstahlmembran, die Grundschicht 2 aus einem 0,1 mm dicken Glasträger. Die elektrischen Kontakte 3 und die Inseln 6 bestehen aus Gold. Die aktive Fläche des Sensors 1 mit den Inseln 6 beträgt ca. 20 *µ*m mal 5 mm. Die geringste mögliche Abmessung ist durch den erforderlichen Abstand 15 der Inseln 6 vorgegeben: der Sensor 1 muß mindestens zwei Inseln 6 aufweisen, die über einen Tunnelstrom miteinander verbunden sind. Da dieser Abstand sehr gering gehalten werden kann, kann der Sensor 1 extrem klein gebaut werden.

Die Grundschicht 2 wurde solange mit Gold in einem Hochvakuum bedampft, bis der gewünschte Oberflächenwiderstand erreicht wurde.

Bei der hier verwendeten Fläche ergeben bereits geringe Drücke Änderungen des Tunnelstromes von mehreren 10 mA.

Aufgrund der Möglichkeit, jede räumliche und / oder qualitative Änderung der Inseln 6 und / oder Partikel 5 meßtechnisch zu erfassen, ergeben sich eine Vielzahl von Anwendungen. Neben der Ausbildung als Drucksensor, wie es in der Figur 4 dargestellt ist, wäre beispielhaft auch eine Verwendung auf einer Platine denkbar, auf der flächig, ggf. auch die gesamte Platine bedeckend, ein oder mehrere Sensoren 1 als Inselschichtmuster angeordnet sind, so daß Fehler wie übermäßige lokale Erwärmung sofort mit beiden Koordinaten erkannt werden, die Stelle lokalisiert ist und die Platine repariert werden kann. Auch eine Verwendung in Mikrochips zur Erkennung von Betriebszuständen ist möglich. Die Sicherheit, beispielsweise einer Steuerung, wäre erhöht und die Raparaturkosten - aufgrund der Fehlerlokalisierung - reduziert.

### Bezugszeichenliste:

- 1: Sensor
- 2: Grundschicht
- 3: Kontakt
- 4: Trägerschicht
- 5: Partikel
- 6: Insel
- 7: Meßgerät
- 8: Spannungsquelle
- 9: Inselquelle
- 10: Verdampfer
- 11: Substanz
- 12: Oberfläche
- 13: Belag
- 14: Ofen
- 15: Abstand
- 16: Pfeil

## Patentansprüche

1. Verfahren zur Herstellung eines Sensors zur Messung physikalischer und / oder chemischer Größen mit Hilfe eines Tunnelstromeffekts mit folgenden Schritten:
1. an Kontakte (3) einer Grundschicht (2) wird eine Spannung angelegt,
2. eine aus Partikeln bestehende Substanz (11) wird derart in und /oder abdeckungsfrei auf der Grundschicht (2) angeordnet, dass zwischen den Kontakten (3) ein Tunnelstrom durch die Grundschicht (2) fließt,
3. die Menge der anzuordnenden Substanz (11) wird in Abhängigkeit einer zwischen den Kontakten (3) gemessenen elektrischen Größe gesteuert, bis bei einer vorgegebenen Spannung ein vorgegebener Tunnelstrom fließt.

2. Verfahren nach Anspruch 1, **dadurch gekennzeichnet, dass** als elektrische Größe ein Tunnelstrom, ein Widerstand oder eine Spannung gemessen wird.

3. Verfahren nach Anspruch 1 oder 2, **dadurch gekennzeichnet, dass** eine mittlere Partikelgröße und -verteilung für gegebene Materialien anhand des Tunnelstroms eingestellt . wird, nachdem zuvor eine Kalibrierung stattgefunden hat.

4. Verfahren nach Anspruch 3, **dadurch gekennzeichnet, dass** die Kalibrierung, insbesondere durch eine elektronenmikroskopische Untersuchung erfolgt.

5. Verfahren nach einem oder mehreren der Ansprüche 1 bis 4, **dadurch gekennzeichnet, dass** die aufzubringende Substanz (11) mittels eines Verdampfers (10) bereitgestellt wird, und dass die Aufbringung in einem Vakuum erfolgt.

6. Verfahren zur Herstellung eines Sensors (1) zur Messung physikalischer und / oder chemischer Größen mit Hilfe eines Tunnelstromeffektes mit folgenden Schritten:
1. an Kontakte (3) einer Grundschicht (2) wird eine Spannung angelegt,
2. auf einer Grundschicht (2) wird ein Belag (13) aufgebracht,
3. die Grundschicht (2) mit dem Belag (13) wird einer thermischen Behandlung unterworfen,
4. die thermische Behandlung wird derart gesteuert, dass
4.1. Atome aus dem Belag (13) in die Grundschicht (2) diffundieren und
4.2. dort Partikel (5, 6) bilden, die so verteilt sind,
4.3. dass zwischen den Kontakten (3) ein Tunnelstrom durch die Grundschicht (2) fließt,
5. die Menge der anzuordnenden Partikel (5,6) wird in Abhängigkeit einer zwischen den Kontakten (3) gemessenen elektrischen Größe gesteuert, bis bei einer vorgegebenen Spannung ein vorgegebener Tunnelstrom fließt.

## Claims

1. Method for the production of a sensor for the measurement of physical and/or chemical values by making use of a tunnelcurrent effect with the following steps:
1. a voltage is put to contacts (3) of a base layer (2),
2. a substance (11) consistent of particles is disposed in such a way in and/or uncovered on the base layer (2), that a tunnelcurrent is flowing between the contacts (3) through the base layer (2),
3. the amount of the substance (11) to be disposed is controlled in dependency of an electrical value measured between the contacts (3), until at a given voltage a given tunnelcurrent is flowing.

2. Method according to claim 1, **characterized in that** a tunnelcurrent, a resistance or a voltage is measured as an electrical value.

3. Method according to claim 1 or 2, **characterized in that** for given materials an average size and distribution of the particles is adjusted by means of the tunnelcurrent, after a calibration has previously taken place.

4. Method according to claim 3, **characterized in that** the calibration in particular is accomplished by means of an electron-microscopic examination.

5. Method according to one or several of the claims 1 to 4, **characterized in that** the substance (11) to be applied is provided by means of a vaporizer (10), and the application is accomplished in a vacuum.

6. Method for the production of a sensor (1) for the measurement of physical and/or chemical values by making use of a tunnelcurrent effect with the following steps:
1. a voltage is put to contacts (3) of a base layer (2)
2. a cover (13) is applied to a base layer (2)
3. the base layer (2) with the cover (13) is submitted to a thermal treatment
4. the thermal treatment is controlled in such a way, that
4.1 atoms diffuse from the cover (13) into the base layer (2) and
4.2 compose particles (5,6) there, which are distributed in such a way
4.3 that between the contacts (3) a tunnelcurrent flows through the base layer (2),
5. the amount of the particles (5,6) to be disposed is controlled in dependency of an electrical value measured between the contacts (3), until at a given voltage a given tunnelcurrent is flowing.

## Revendications

1. Procédé pour la production d'un capteur pour la mesure des valeurs physique et/ou chimique à l'aide d'un effet tunnelcourant avec les pas suivants
1. un voltage est mis aux branchements (3) d'une couche base (2),
2. une substance (11) composée des particules est disposée de telle manière dans et/ou sans couverture sur la couche base (2), qu'un tunnelcourant passe entre les branchements (3) au travers de la couche base (2),
3. la quantité de la substance disposée est commandé en dépendance d'un valeur électrique entre les branchements (3) jusqu'au voltage fixé à l'avance circule un tunnelcourant fixé à l'avance.

2. Procédé selon la revendication 1, **caractérisé en ce que** un tunnelcourant, une résistance ou un voltage est mesuré comme valeur électrique.

3. Procédé selon les revendication 1 ou 2, **caractérisé en ce que** la moyenne grandeur et distribution des particules pour les matériaux donnés sont mis au point à l'aide du tunnelcourant, après qu'un étalonnement s'est passé préalablement.

4. Procédé selon la revendication 3, **caractérisé en ce que** l'étalonnement en particulier s'effectue par un examen microscope électronique.

5. Procédé selon une ou plusieurs des exigences 1 à 4, **caractérisé en ce que** la substance (11) à appliquer est mise à la disposition à l'aide d'un évaporateur (10), et que l'application se produit dans un vide.

6. Procédé pour la production d'un capteur (1) pour la mesure des valeurs physique et/ou chimique à l'aide d'un effet tunnelcourant avec les pas suivants :
1. un voltage est mis aux branchements (3) d'une couche base (2),
2. un revêtement (13) est appliqué sur une couche base (2),
3. la couche base avec le revêtement est soumise à un traitement thermique,
4. le traitement thermique est commandé de cette manière, que
4.1 des atomes du revêtement (13) diffusent dans la couche base (2) et
4.2 forment des particules (5, 6), lesquelles sont disposées de cette manière,
4.3 qu'un tunnelcourant passe entre les branchements (3) au travers de la couche base (2),
5. la quantité des particules (5, 6) disposées est commandée en dépendance d'un valeur électrique entre les branchements (3) jusqu'à un tunnelcourant fixé à l'avance circule à un voltage fixé à l'avance.
